# EUROPEAN PATENT SPECIFICATION

(11) **EP 1 756 190 B1**
(45) Date of publication and mention of the grant of the patent: **21.01.2009**
(21) Application number: 05735073.8
(22) Date of filing: 06.04.2005
(51) Int. Cl.: C08G 61/00, C08G 75/00

(54) **RADICALLY CURABLE RESIN COMPOSITIONS**
RADIKALISCH HÄRTBARE HARZZUSAMMENSETZUNGEN
COMPOSITIONS DE RESINE DURCISSABLES PAR REACTION RADICALAIRE

(30) Priority: 14.04.2004 EP 04076107
(43) Date of publication of application: 28.02.2007
(73) Proprietor: DSM IP Assets B.V., 6411 TE Heerlen (NL)
(72) Inventor: JANSEN, Johan Franz Gradus Antonius, NL-6165 AP Geleen (NL); DRIESSEN, Marco, Marcus, Matheus, NL-6051 EE Maasbracht (NL); VAN DIJCK, Michael, Alphonsus, Cornelis, Johannes, 3960 Bree-Opitter (BE)
(74) Representative: Verhaegen, Ilse Maria M.
(86) International application number: PCT/EP2005/003724
(87) International publication number: WO 2005/100436

(56) References cited:
- EP-A- 0 336 420
- EP-A- 0 338 616
- EP-A- 1 099 691
- EP-A- 1 153 977
- US-A- 4 698 385
- US-A- 4 849 486
- US-A- 4 897 438
- PATENT ABSTRACTS OF JAPAN vol. 1997, no. 06, 30 June 1997 (1997-06-30) & JP 09 052939 A (SUMITOMO BAKELITE CO LTD), 25 February 1997 (1997-02-25)
- PATENT ABSTRACTS OF JAPAN vol. 0112, no. 00 (C-431), 27 June 1987 (1987-06-27) & JP 62 020556 A (ENG PLAST KK), 29 January 1987 (1987-01-29)
- PATENT ABSTRACTS OF JAPAN vol. 0041, no. 90 (C-037), 26 December 1980 (1980-12-26) & JP 55 129416 A (MITSUBISHI PETROCHEM CO LTD), 7 October 1980 (1980-10-07)
- PATENT ABSTRACTS OF JAPAN vol. 0030, no. 19 (C-037), 17 February 1979 (1979-02-17) & JP 53 142456 A (HITACHI CABLE LTD), 12 December 1978 (1978-12-12)

## Description

The present invention relates to resin compositions for radical curing comprising a component containing reactive carbon-carbon unsaturations (also referred to as the "reactive unsaturations component" or "RU component") and a component containing XH-groups (also referred to as the "XH-component") with X not being C or O. As meant herein, the term component containing reactive carbon-carbon unsaturations ("RU component") refers to compounds capable of being reactively involved in a radical process at conditions of ambient temperature and pressure. As meant herein, the term component containing XH-groups ("XH-component") refers to compounds having a labile X-H bond (with X not being a carbon or oxygen atom) and capable of being reactively involved in a radical process at conditions of ambient temperature and pressure.

The present invention also relates to processes for curing such resin compositions, in particular by cold curing. And finally, the present invention also relates to a new process for the synthesis of certain Diels-Alder adduct components from reaction of cyclopentadiene with a resin component containing at least one telechelic carbon-carbon unsaturation. These Diels-Alder adduct components can suitably be used as the reactive carbon-carbon unsaturations containing component of the resin compositions according to the invention.

Resin compositions for radical curing comprising a component containing reactive carbon-carbon unsaturations ("RU component") and a polythiol component (the XH-component) and an effective amount of a free radical initiator are known from WO 88/02902. The examples shown in said reference are all dealing with telechelic unsaturations, and are predominantly focused on photoinitiation. The only two examples shown for thermal curing teach long times required for curing. In particular it can be seen from Example 3 of WO 88/02902, that - even after 12 hours of curing - only a gel is obtained. Formulation 5 of WO 88/02902 consists of a mixture of the bis-norbomene terminated derivative of Sartomer 351^{™}, tris-1,2,3-(norborn-5-ene-2- carboxy) propoxy propane, pentaerithritol tetrathioglycolate, saccharin and cumene hydroperoxide; this formulation is for use as a glue, but completely unsuitable for structural applications. WO 88/02902, accordingly, does not teach anything at all about possible use and/or advantages in constructive applications, nor about cured networks being formed in the curing process. Accordingly, use of the resin compositions of WO 88/0292 is apparently restricted to photoinitiation and to suitable applications in glues.

EP-A-0156493 also discloses resin compositions for radical curing comprising a thiol component and reactive carbon-carbon unsaturations. However, this document is restricted to (meth)acrylates, to a maximum amount of thiol-component of15 wt.%, and requires the presence of vanadium. The resin compositions of EP-A-0156493 are used solely for coatings.

EP1099691A relates to N-sulfonyloxyimide compounds being an acidic photoinitiator and to a radiation-sensitive resin composition containing this compound. The composition of EP1099891A does not contain a XH-component with X not being C or O.

EP1153977A describes a resin composition, binder resin for toner and a toner, in which no XH-component with X not being C or O is being employed.

JP09052939 describes an epoxy resin composition, in which no XH-component with X not being C or O is being employed.

EP0336420A describes aromatic polyethers, fluorescent resin compositions containing aromatic polyethers and processes for preparing aromatic polyethers, in which neither a XH-component with X not being C or O nor a RU-component is employed.

US4897438A describes a stabilized synthetic resin composition in which no XH-component with X not being C or O is being employed, nor a RU-component.

US4849486A describes a polyphenylene ether resin composition in which no XH-component with X not being C or O is being employed.

JP62020556A describes a polyphenylene ether resin composition in which no XH-component with X not being C or O is being employed.

JP55129416A describes a curable epoxy resin composition in which no XH-component with X not being C or O is being employed.

JP53142456A describes a curable composition in which no XH-component with X not being C or O is being employed.

Problems encountered with the resin compositions according to the prior art are, apart from the disadvantages mentioned above, that the cured resins appear to be unsuitable for constructive materials and structural parts, and that the resin compositions do not give rapid curing in thermal curing reactions and suffer from so-called oxygen inhibition. The curing of vinyl ester resin compositions, generally, results in cured products having a tacky surface.

Accordingly there is a long-felt need for providing resin compositions that are capable of providing constructive materials with tack-free surfaces by fast, and tunable, radical curing, and without any problems of so-called oxygen inhibition.

These problems surprisingly have been overcome by providing resin compositions for radical curing comprising a component containing reactive carbon-carbon unsaturations ("RU component") and a component containing XH-groups ("XH-component") with X not being C or O, wherein
a. the resin composition is substantially free of photoinitiators; and
b. the average number of reactive carbon-carbon unsaturations of the RU component is higher than 2; and
c. at least one of the XH-groups of the XH-component is a thiol group, and the average number of XH-groups of the XH-component is equal to or higher than 2; and whereby
d. at least one of the average numbers of the unsaturations, respectively of the XH-groups is higher than 2; and
e. at most 5 mol% of the reactive unsaturations is capable of undergoing homopolymerisation; and
f. at most 5 mol% of the reactive unsaturations is present in the form of a mono-ene functional alkylene; and
h. the molar ratio of the XH-groups and of the reactive unsaturations is in the range of from 4 : 1 to 1 : 4;
with the proviso that the RU component is not tris-(norbom-5-ene-2-carboxy) propoxypropane.

As a result the abovementioned problems are overcome. In addition further advantages are obtained in that the cured resin compositions exhibit almost no shrinkage, even if the resin compositions comprise (meth)acrylates. As meant in the context of the present invention, the term "substantially free of photoinitiators" means that the composition does not contain any significant amount of initiators that are decomposed into radicals, at least one of which radicals is a carbon-centered radical, under the influence of UV or visible light radiation in the temperature range below 200°C (but not by thermal decomposition in said temperature range). Photoinitiators, of course, also are capable of being decomposed thermally into such radicals, but such thermal decomposition then occurs at temperatures above 200 °C.

For better understanding of the present invention the following explanations regarding the terminology used herein are considered to be helpful.

The term reactive carbon-carbon unsaturation (RU), as used in this application, includes any of single carbon-carbon double bonds or triple bonds (also called morio-alkenes or mono-alkynes); and of conjugated double or triple carbon-carbon unsaturated bonds (examples are conjugated dienes, trienes, and so on, and conjugated polyenes; conjugated diynes, triynes, and so on; an RU may also be homo-allylic, i.e. having a δ,ε-unsaturated double or triple bond next to a first (α,β; but not necessarily terminal) carbon-carbon unsaturated bond.

The average number of RUs is to be distinguished from the functionality per individual RU: one alkene bond has a functionality of 1 (i.e. this also can be called "mono-ene functional"); one alkyne bond has a functionality of 2 (i.e. it is difunctional); a conjugated diene (being one RU) is difunctional as well; a conjugated triene is trifunctional, and so on. Non-conjugated dienes consist of 2 RUs, each being monofunctional. For clarity reasons it is noticed that homo-allylic unsaturations are regarded as conjugated unsaturations. For the resin compositions according to the invention, the average number of reactive carbon-carbon unsaturations of the RU component is higher than 2. The functionality of each RU, however, is equal to or higher than 1.

The RUs in the resin component can be located at various positions therein. Such position is named telechelic, if the RU is located near (i.e. located within the last 10 terminal atoms) a terminus of (long, i.e. > 10 atoms of chain length) chains of a resin molecule. Of course, in one resin molecule more than one telechelic RU may be present. Positions of RUs are named pendant, if they are telechelically present in short side chains (i.e. in side chains of at most 10 atoms chain length) of a resin molecule comprising at least one long main chain and one or more of such short side chains. The RUs are named backbone-RUs if they are present at a non-telechelic position in the main chain (and/or in one or more side chains) of the resin molecule.

The resin molecules can be called unbranched, if they consist of a linear chain of atoms, which may be substituted with one or more short pendant side groups (i.e. at most 10 atoms each). Resin molecules are named branched if they have a main chain and one or more side chains (of more than 10 atoms each) attached to said main chain. The side chains themselves also may be branched. The degree of branching of a resin component can best be indicated by its branching number. An unbranched resin component has a branching number of 0. If there is one long side chain (more than 10 atoms), the branching number is 1; with two long side chains the branching number is 2, as is the case where there is one long side chain, substituted with another long side chain. Higher branching numbers are also possible, and can be assessed by counting of the branches of long (i.e. > 10 atoms) side chains attached to the main chain and/or long side chains. It should be noted, that carbocyclic structures within a resin component do not need to be taken into account when determining the branching number of a resin component. The number of telechelic positions in a resin molecule is two higher than the branching number of such resin molecule.

According to the present invention, for the XH-component, at least one of the XH-groups of the XH-component should be a thiol group, and the average number of XH-groups means the number of XH-groups per molecule of XH-component (if all molecules of the XH-component are identical) or the weighted average of number of XH-groups (if the XH-component is a mixture of XH-groups containing compounds).

As meant herein, XH reflects any labile X-H bond with X representing almost any type of atom, except for carbon and oxygen atoms. X thus can be chosen from a wide variety of elements. In the molecules of the XH-component more than one type of XH-bonds may be present (i.e. more than one X may be present). Examples of molecules containing different XH-groups are, for instance, aminothiols. Of course, mixtures of XH-components may also be used, provided that at least one of the XH-groups of the XH-component is a thiol group.

For calculating the mol% of (a specific type of) the reactive unsaturations first the (average) total number of RUs per molecule of resin component is determined (this represents 100 mol% of RUs), and then the number of any such specific type of RUs (for instance telechelic ones) is determined and divided by said total number and multiplied by 100%.

RUs are said to be capable of undergoing homopolymerisation when they are involved in radical polymerisation with RUs of the same type at ambient temperature and pressure. Examples of components capable of undergoing homopolymerisation are, for instance, acrylates, methacrylates and itaconates. Copolymerisation occurs in the context of the present invention if polymerisation bond formation occurs between different types of RUs that react radically at ambient conditions of temperature and pressure. Such reactions, for instance, occur in reactions of fumarates or maleates, with vinyl ethers, allyl ethers, styrene or derivatives with styrenic unsaturation.

In the resin compositions according to the invention preferably at least one of the average numbers of the reactive carbon-carbon unsaturations, respectively of the XH-groups is higher than 2,5. Even more preferably, at least one of the average numbers of the reactive carbon-carbon unsaturations, respectively of the XH-groups is higher than 3.

Good results with the resin compositions according to the invention are achieved in resin compositions wherein the molar ratio of the XH-groups and of the reactive carbon-carbon unsaturations is in the range of from 1,5: 1 to 1 : 1,5. Most preferably, the average functionality per RU of the reactive carbon-carbon unsaturations is in the range between 1 and 2.

As mentioned above, functionality (per RU) is to be distinguished from the number of RUs : one alkene bond has a functionality of one (i.e. this can also be called "mono-ene functional"); one alkyne bond has a functionality of two (i.e. it is difunctional); a diene is difunctional as well; a triene is trifunctional, and so on.

Preferably, in the resin compositions according to the invention, the XH-groups are present in an XH-component or a mixture of XH-components having an average number of XH-groups per mol equal to or higher than 3. More preferably, the XH-groups are present in an XH-component having an average number of XH-groups per mol equal to or higher than 4.

It is particularly preferred, that in the resin composition according to the invention the average number of the reactive carbon-carbon unsaturations is equal to or higher than 2,5, and more preferably equal to or higher than 3, and even more preferred equal to or higher than 4. Excellent results are achieved if the aggregate average of the average number of the reactive carbon-carbon unsaturations and of the average number of XH-groups is equal to or higher than 2,5. The aggregate average as meant here can be calculated easily by taking half of the sum of the figures for the average numbers of RUs and XH-groups. More preferably, the aggregate average of the average number of the reactive carbon-carbon unsaturations and of the average number of XH-groups is equal to or higher than 3.

Although the resin compositions according to the invention are suitable for being cured radically if the mol% of reactive carbon-carbon unsaturations capable of undergoing homopolymerisation is 5 mol% or less, said mol% is preferably in the range of from 0 to 1 mol%. Most preferably said mol% is higher than 0. This is because presence of homopolymerisable groups will have a favourable impact on stability of the composition with respect to radicals that might be formed during storage, as such homopolymerisable groups can assist in scavenging of such radicals. It should be noted, that the mol% of reactive carbon-carbon unsaturations capable of undergoing homopolymerisation for the resin compositions disclosed in EP-A-0156493 is far above 5 mol%. The resin compositions according to the present invention are, already for that reason, completely distinct from the ones disclosed in EP-A-0156493.

Further, and although the resin compositions of the invention for obtaining good results in curing may contain at most 5 mol% of the reactive carbon-carbon unsaturations in the resin composition in the form of a mono-ene functional alkylene, it is preferred that the mol% of reactive carbon-carbon unsaturations present in the form of a mono-ene functional alkylene is in the range of from 0 to 1 mol%.

In the resin compositions according to the invention, the XH-component is preferably selected from the group of thiol-, phosphine- and amine-components. Most preferably, at least one of the XH-groups in the XH-component is a thiol group. A long list of examples of thiol components that might be used in the context of the present invention, for instance, can be found in paragraphs [015], [016] and [017] of the specification of EP-B-1066335.

The XH-component in the resin compositions according to the invention is preferably an aliphatic thiol component. More preferably, the thiol component is selected from the group of α-mercapto acetate esters and/or β-mercapto propionate esters of mono-alcohols, diols, triols, tetraols, pentaols and other polyols, and/or of derivatives of mercaptoalkyl-trialkoxysilane compounds.

As mentioned above, the reactive unsaturations in the component containing reactive carbon-carbon unsaturations may be present at various places of the molecules (or mixture of molecules) of the component containing reactive carbon-carbon unsaturations. Part of the reactive unsaturations present in the component containing reactive carbon-carbon unsaturations, for instance, may be present in the backbone thereof. For the avoidance of doubt, the term backbone as meant here includes the main chain and all long side chains of at least 10 atoms chain length; as well as all pendant chains. It is preferred that the part of reactive carbon-carbon unsaturations present in the backbone of the component containing reactive carbon-carbon unsaturations corresponds to at least an average number of reactive carbon-carbon unsaturations equal to or higher than 1. This means, that if, for instance, the average number of the reactive unsaturations of the component containing reactive carbon-carbon unsaturations is 2,5 or 3, and the average number of reactive unsaturations present in the backbone equals 1,2, than the average number of reactive unsaturations not present in the backbone is 1,3 or 1,8.

Part of the reactive unsaturations present in the component containing reactive carbon-carbon unsaturations may be present in a cyclic or heterocyclic structure.Said part of reactive carbon-carbon unsaturations is preferably present in a C₅₋₁₂ cyclic or heterocyclic structure, more preferably in a C₇₋₉ cyclic or heterocyclic structure, and corresponds to at least an average number of reactive carbon-carbon unsaturations equal to or higher than 1. Most preferably, the said part of reactive carbon-carbon unsaturations is present in a C₅₋₁₂ carbocyclic structure, preferably a C₇₋₉ carbocyclic structure. Carbocyclic structures do not contain any heteroatom in the ring. As mentioned above, aromatic rings are not considered to be falling under the definition of cyclic or heterocyclic ring structures containing one or more reactive unsaturations.

It is particularly preferred, that the said part of reactive carbon-carbon unsaturations present in a cyclic or heterocyclic structure is present in a C₅₋₁₂ bicyclic structure, more preferably a C₇₋₉ bicyclic structure. Examples of such bicyclic structures are dicyclopentadiene, norbornene (i.e. bicyclo-[2.2.1]-heptane), substituted dicyclopentadienes and norbornenes, bicyclo-[2.2.2]-octane, bicyclo-[3.2.1]-octane, bicyclo-[3.2.3]-nonane. 5-Membered ring ethylenic dicyclopentadiene compounds are especially preferred.

Part of the reactive unsaturations present in the component containing reactive carbon-carbon unsaturations may be present in a telechelic position in the component containing reactive carbon-carbon unsaturations. The term telechelic position means that the reactive unsaturations are present near a terminus of a main chain or a long side chain.The part of reactive carbon-carbon unsaturations present in a telechelic position in the component containing reactive carbon-carbon unsaturations preferably corresponds to at least an average number of reactive carbon-carbon unsaturations equal to or higher than 1.

The component containing reactive carbon-carbon unsaturations, however, may also be a result of polymerisation with formation of longer side chains, thereby creating kinds of branched polymer, each chain starting at a branching point being a polymeric chain itself, or may in part contain such branched polymer next to an amount of linear polymer. For the resin compositions according to the invention, the part of reactive unsaturations present in a component containing reactive carbon-carbon unsaturations containing branched polymer chains has a branching number equal to or higher than 1, preferably higher than 1,5, and most preferably higher than 2.

According to the invention branching not only can be present in the component containing the reactive carbon-carbon unsaturations, but also in the XH-component. Examples of such branched XH-components, where the XH-group is a thiol group, are trimethylolethane tris(3-mercapto-propionate), trimethylolpropane tris(3-mercaptopropionate), pentaerythritol tetra(3-mercaptopropionate), dipentaerythritol hexa(3-mercaptopropionate), glycerol tri(3-mercaptopropionates), trimethylolethane trimercaptoacetate, trimethylolpropane trimercaptoacetate, pentaerythritol tetramercaptoacetate, dipentaerythritol hexamercaptoacetate, trivinylcyclohexylpoly mercaptan, trithiocyanuric,acid, and their ethoxylated or propoxylated derivatives.

Examples of other suitable XH-components are: polyethylene amines; phosphines, diphosphines, polyphosphines, e.g. phenylphosphine ethane diphosphine; ethane di(phenylphosphine); phosphites; thiophosphines; aminophosphines; and mixtures as well as polymeric forms thereof.

The component containing reactive carbon-carbon unsaturations in the resin compositions according to the invention may be selected from the group of all ethylenically unsaturated polyesters known to the skilled man for use in structural applications. Examples thereof can be found in the aforementioned review article by M. Malik *et al.,* who describe a classification of such resins - on the basis of their structure - in five groups: (1) ortho resins; (2) iso-resins; (3) bisphenol-A-fumarates; (4) chlorendics, and (5) vinyl ester resins. Besides these classes of resins also so-called dicyclopentadiene (DCPD) resins can be distinguished. Many of such unsaturated polyesters are commercially available at large scale.

The component containing reactive carbon-carbon unsaturations is preferably selected from the groups of
(i) fumaric, maleic, mesaconic, crotonic, cinnamic and/or sorbic acid esters or amides and/or Diels-Alder adducts thereof with diene compounds; and
(ii) Diels-Alder adducts of acrylic, methacrylic or itaconic acid esters or amides with diene compounds; and
(iii) 5-membered rings ethylenic dicyclopentadiene compounds.

Especially good results are achieved when the Diels-Alder adduct is an adduct with butadiene or cyclopentadiene. Diels-Alder adducts with cyclopentadiene are most preferred. When the component containing reactive carbon-carbon. unsaturations is a Diels-Alder adduct, it can be either prepared by performing a Diels-Alder adduct formation reaction on a starting resins containing reactive carbon-carbon unsaturations. Alternatively, however, it can be prepared by using a Diels-Alder adduct from monomeric compounds as a starting material for the resin preparation. In particular, bicyclo-[2.2.1]-hept-5-ene-2,3-dicarboxylic anhydride (the Diels-Alder adduct of maleic acid and cyclopentadiene) is applied, or the corresponding Diels-Alder adduct formed with maleic acid groups in the resin. Such resins then can be called HIMIC resins. Most preferably, the Diels-Alder adduct is incorporated in the backbone of the RU component.

It is well known that unsaturated polyesters as prepared, or as are commercially available, may contain certain amounts of diluent in order to keep them fluid or less viscous for simplifying their handling. Such diluents may be inert to the component containing the reactive carbon-carbon unsaturations and/or other reactants in the resin composition, or may be reactive therewith. In the resin compositions according to the present invention, in addition to the component containing reactive carbon-carbon unsaturations, preferably also a reactive diluent containing reactive unsaturations is present in an amount of at most 25 wt.% of the component containing the reactive carbon-carbon unsaturations.

Calculation of the average number RUs of the resin composition if a diluent with reactive carbon-carbon unsaturations is present therein is easy by taking the weighted average of RUs for the total resin composition, i.e. taking into account the weight percentages of RU-component and RU-containing diluent

Excellent results are achieved when in the resin composition according to the invention, at least for part of the reactive carbon-carbon unsaturations in the component containing such unsaturations, the functionality of the reactive unsaturations is higher than 2.

According to the invention at most 5 mol% of the reactive unsaturations in the component containing reactive carbon-carbon unsaturations is capable of undergoing homopolymerisation. Nevertheless, the resin compositions of the invention, especially when the resin composition comprises a mixture of components containing reactive unsaturations, may contain, calculated as a percentage by weight, still relatively high percentages of copolymerisable, components. Preferably at most 50 mol% of the mixture of reactive carbon-carbon unsaturations containing components is copolymerisable, more preferably at most 30 mol%. In other words, preferably more than 50 mol% of the reactive unsaturations in the mixture of components containing such unsaturations, more preferably more than 70 mol% thereof, is polymerized so as to form a network on curing. As meant herein, the term copolymerisable reflects that such component may react with another polymerisable component to form a copolymer at ambient conditions of temperature and pressure. Examples of components containing ethylene double bonds and copolymerisable with each other are vinyl groups and fumarates, vinyl groups and maleates, styrene with fumarates or maleates, (meth)acrylates and other monomers, and optionally cyclopentadiene, vinyl groups and HIMIC, etc. In general, such copolymerisation reaction takes place between an electron-rich and an electron-poor double bond. Of course with copolymerisation may also occur at carbon-carbon triple bonds.

Further, in the resin compositions according to the invention, the average molecular weight of the component containing reactive carbon-carbon unsaturations, and excluding the optional reactive carbon-carbon unsaturations from the reactive diluent, preferably is in the range of at least 500, preferably at least 1000, more preferably at least 2000 and at most 15000 Dalton. The term average molecular weight of the component containing reactive unsaturations reflects the M_{w} of the said resin component as such. In the calculation of the said average molecular weight, therefore only the component containing the reactive carbon-carbon unsaturations, but not the reactive carbon-carbon unsaturations containing reactive diluent, is taken into account.

In some cases, however, it may be more convenient to calculate the average molecular weight per reactive unsaturations present in the summed mass of the component containing reactive carbon-carbon unsaturations and of the reactive diluent. The average molecular weight per carbon-carbon reactive unsaturation present in the summed mass of the component containing reactive carbon-carbon unsaturations and of the reactive diluent is preferably 150 Dalton or higher.

Similar molecular weight calculations and/or characterisations may also be made with respect of the XH-groups in the XH-component. As such, both the average molecular weight of the XH-component, and the average molecular weight per XH-group present in the XH-component can be distinguished. The average molecular weight of the XH-component is preferably in the range of at least 200, more preferably at least 300 and at most 2500 Dalton. Further, the average molecular weight per XH-group present in the XH-component is preferably 100 Dalton or higher.

The resin compositions according to the invention may also contain substances acting as inhibitors (i.e. preventing premature curing reactions), accelerators (i.e. ensuring that the curing - when initiated - is occurring at a sufficiently high rate), and/or initiators (i.e. substances that, under proper conditions, are capable of initiating the curing reaction). The skilled person is aware of the existence of such inhibitors, accelerators and initiators from the abundant literature in the field of resin preparation and curing.

In particular, the resin compositions according to the invention preferably also contains an inhibitor in an amount of 0,00001 to 5,0 wt.% calculated with respect to the total mass of reactive carbon-carbon unsaturations and XH-groups containing components. The inhibitors are preferably selected from the groups of: (i) phenolic inhibitors; (ii) nitrosyl inhibitors; (iii) phenothiazine inhibitors; or (iv) any combination of phenolic and/or nitrosyl and/or phenothiazine inhibitors.

Suitable examples of inhibitors that can be used in the resin compositions according to the invention are, for instance, p-methoxyphenol, 2,6-di-t-butyl-4-methylphenol, catechol, 4-t-butylcatechol, 2,5-di-t-butylhydroquinone, 2,6-dimethylhydroquinone, 2,2,6,6-tetramethyl-4-hydroxy-piperidine-N-oxyl (hydroxytempo), 3-carboxy-2,2,5,5-tetramethyl-1-pyrrolidinyl-oxy (proxyl), aluminium-N-nitrosophenyl hydroxylamine, phenothiazine and/or derivatives or analogues of phenothiazine, etc.

Moreover, the resin compositions according to the invention preferably also contain an accelerator in an amount of 0,00001 to 5,0 wt.% calculated with respect to the total mass of reactive carbon-carbon unsaturations and XH-groups containing components.

Suitable accelerators that can be used in the resin compositions according to the invention can be selected from, for instance, the group of acetylacetone, ethylacetoacetate, N,N-diethyl-acetoacetamide, and aromatic accelerators such as dimethylaniline, dimethyl-p-toluidine, di-i-propanol-p-toluidine (DipT).

All peroxides known to the skilled man for use in curing of unsaturated polyester resins and vinyl ester resins can be used. Such peroxides include organic and inorganic peroxides, whether solid or liquid; also hydrogen peroxide may be applied. Examples of suitable peroxides are, for instance, peroxy carbonates (of the formula -OC(O)O-), peroxyesters (of the formula -C(O)OO-), diacylperoxides (of the formula -C(O)OOC(O)-), dialkylperoxides (of the formula -OO-), etc. They can also be oligomeric or polymeric in nature. An extensive series of examples of suitable peroxides can be found, for instance, in US 2002/0091214-A1. paragraph [0018]. The skilled person can easily obtain information about the peroxides and the precautions to be taken in handling the peroxides in the instructions as given by the peroxide producers.

The peroxide is preferably chosen from the group of organic peroxides. Examples of suitable organic peroxides are: tertiary alkyl hydroperoxides (such as, for instance, t-butyl hydroperoxide), and other hydroperoxides (such as, for instance, cumene hydroperoxide), peroxyesters or peracids (such as, for instance, t-butyl peresters, benzoyl peroxide, peracetates and perbenzoates, lauryl peroxide, including (di)peroxyesters), perethers (such as, for instance, peroxy diethyl ether), perketones (such as, for instance, methyl ethyl ketone peroxide). Often the organic peroxides used as curing agent are tertiary peresters or tertiary hydroperoxides, i.e. peroxy compounds having tertiary carbon atoms directly united to a -O-O-acyl or -OOH group. Clearly mixtures of these peroxides with other peroxides may also be used in the context of the present invention. The peroxides may also be mixed peroxides, i.e. peroxides containing any two of different peroxygen-bearing moieties in one molecule).

Most preferably the peroxide is a liquid peroxide. Handling of liquid peroxides when curing the resins for their final use is generally more easy: they have better mixing properties and dissolve more quickly in the resin to be cured.

The types and amounts of inhibitor and/or accelerator are to be chosen in dependence of the component containing reactive carbon-carbon unsaturations used and of the initiator to be used for the radical curing. For instance, amines will generally be used as accelerator when the curing is to be done with a perester or peranhydride, such as benzoyl peroxide; or a ligand of cobalt, manganese or vanadium will be chosen as accelerator when to be used in combination with other peroxides than benzoyl peroxide. However, depending on the type of the RU- and XH-components, it may also be possible to cure without an accelerator.

Preferred accelerators used in the resin compositions of the invention are either an amine when used for curing in combination with a perester and/or peranhydride compound as initiator for the curing, or a soluble salt or complex of single metals or mixtures thereof selected from any of cobalt, vanadium, copper, iron, manganese or titanium when used for curing in combination with any other type of peroxide than peresters and/or peranhydrides as initiator for the curing.

The resin compositions according to the invention are preferably compositions capable of being cured with a peroxide initiator, more preferably with a peroxide selected from the group of liquid peroxides and (solid) benzoyl peroxide.

Further, the present invention also relates to a process for the radical curing of a resin composition as described hereinabove, wherein such resin composition is treated - at a suitable temperature - with a peroxide, an azo compound, or a benzopinacol. The curing is preferably done with a peroxide, or a combination of phosphoric acid and a benzopinacol. Curing with a benzopinacol, i.e. with benzopinacol itself or a derivative thereof containing the benzopinacol moiety, is particularly preferred when the resin compositions are going to be used as bulk moulding compounds (BMCs) or sheet moulding compounds (SMCs). Curing of heat-activated unsaturated polythiol compounds has been described already long time ago in US-A-4,020,233. Said document, however, is related to coating applications etc., and does not teach or suggest the present invention.

In particular according to the invention, this process for curing is performed starting from a two-component resin composition system according to any of the following embodiments:
a. a first component comprising the component containing reactive carbon-carbon unsaturations, and the XH-groups containing component, and optionally a reactive diluent; and a second component comprising a peroxide;
b. a first component comprising the component containing reactive carbon-carbon unsaturations, and optionally a reactive diluent; and a second component comprising the XH-groups containing component and a peroxide;
c. a first component comprising the XH-groups containing component; and a second component comprising a peroxide and the component containing reactive carbon-carbon unsaturations, and optionally a reactive diluent, provided that in this embodiment c. the component containing reactive carbon-carbon unsaturations is substantially free of homopolymerisable and/or copolymerisable reactive unsaturations.

Two-component resin composition systems (first component plus second component) are well known to the skilled person in the field of structural resins and applications thereof.

In particular, the curing is effected in the process of the invention at a temperature in the range of from -20 to +200 °C, preferably in the range of from -20 to +100 °C, most preferably in the range of from -10 to +60 °C. In the latter, most preferred, temperature range, the curing process may also be called a cold curing process.

The resin compositions and the process according to the present invention suitably may be used for providing materials that are used in chemical anchoring, roofing, flooring, (re)-lining, SMCs and BMCs, and all kinds of structural applications where strength of the cured materials is essential.

Finally, the invention relates to a new process for the synthesis of certain Diels-Alder adduct components from reaction of cyclopentadiene with a resin component containing at least one telechelic carbon-carbon unsaturation. Such components can very suitably, and most preferred, be used in one of the embodiments of the resin compositions according to the invention as have been mentioned above. The present inventors, namely have found a novel and inventive, and most convenient route for the synthesis of such components, in that (i) in a first step dicyclopentadiene is added at a temperature well below 150 °C to an unsaturated polyester resin component having at least one telechelic carbon-carbon unsaturation per molecule in an amount of at least 0,5 mol of dicyclopentadiene per mol of telechelic carbon-carbon unsaturated bonds in said unsaturated polyester resin starting material; and (ii) in a second step the mixture obtained in the first step is heated to a temperature in the range of from 150 to 180°C; and is allowed to react for a time sufficient for conversion of the telechelic carbon-carbon unsaturated bonds in the unsaturated polyester resin starting material; and (iii) finally the excess of dicyclopentadiene and cyclopentadiene is removed by evaporation.

The temperature well below 150°C, as meant herein, can be any temperature in the range of from ambient temperature to the said upper limit, but preferably will be chosen below 100 °C, more preferably below 50°C. It is most preferred that dicyclopentadiene is added to the unsaturated polyester resin component at ambient temperature. The time allowed for the reaction to reach sufficient conversion will generally be less than 5 hours, and often already less than 2 hours. The skilled person can easily determine the point of time where conversion is deemed to be sufficient by assessing whether the evaporation of cyclopentadiene has reached a stationary state.

This new route is completely surprising, as the skilled person would have expected the heating step to a temperature in the range of from 150 to 180°C to result in a gellified product. This route is particularly suitable for the synthesis of telechelic norbornene containing resin components. Accordingly, and preferably, the telechelic carbon-carbon unsaturated bond is a (meth)acrylic bond.

The invention is now elucidated by means of a series of examples and comparative examples (for preparation of resins), respectively experiments and comparative experiments (for curing of resins), but is by no means restricted to the specific embodiments shown in the examples and experiments.

The following abbreviations are used in the experimental part:

| abbreviation | Description |
|---|---|
| 20S | Perkadox^{®} 20S; a 20% benzoyl peroxide on talc product from Akzo, the Netherlands |
| BMP | butanediol bismercapto propionate |
| bzpl | benzopinacol |
| CPD | cyclopentadiene |
| DBH | dibutylhydroquinone |
| DCPD | dicyclopentadiene |
| DIPT | N,N-diisopropanol toluidine |
| DMPT | N,N-dimethyl toluidine |
| HIMIC | bicyclo-[2.2.1]-hept-5-ene-2,3-dicarboxylic anhydride (the Diels-Alder adduct of maleic acid and cyclopentadiene) |
| M50 | Butanox^{®} M50; a methyl ethyl ketone peroxide product from Akzo, the Netherlands |
| MA | maleic anhydride |
| Mn | a 40% Mn 2-ethylhexanoate solution in white spirits; from ABCR GmbH & Co KG, Germany |
| NL-49 | a 1% solution of Co (cobalt) in white spirits; Akzo, the Netherlands |
| ph.ac. | phosphoric acid |
| PMA | pentaerythritol mercapto acetate |
| PMP | pentaerythritol mercapto propionate |
| pT5A | para-toluene sulphonic acid |
| TEGDVE | Triethylene glycol divinyl ether |
| TMP | trimethylolpropane trimercapto propionate |
| TMPₒₓ | trimethylolpropane oxetane |
| U626 | Ultranox^{®} 626 of Ciba (Switzerland) |
| VN-2 | a 0,2% solution of V (vanadium) in white spirits; Akzo, the Netherlands |
| W_{RU} | average molecular weight per reactive unsaturation |
| W_{XH} | average molecular weight per XH-group |

### Part A: Synthesis of RU components (Resins A-J) for the resin compositions

### Example 1: Synthesis of a norbornene functional resin (Resin A)

A reaction flask equipped with a stirrer, reflux condenser and nitrogen purge was charged, at ambient temperature, with 256 g of ethoxylated bisphenol-A diacrylate (0,5 mol, corresponding to 1 mol of acrylate double bonds), 130 g of DCPD (0,502 mol; corresponding to 1,004 mol CPD) and 0,5 g of DBH. The reaction mixture was heated in 30 minutes under stirring to 170°C and kept at 170 °C for 2 hours. After evaporation of the excess of CPD under reduced pressure a clear resin was obtained. This resin, Resin A, contained 2 telechelic norbornene functionalities and had an average molecular weight per RU (W_{RU}) of 320 D.

### Comparative Example A: Synthesis of a norbornene functional resin

Example 1 was repeated, except for the moment of charging of the 130 g of DCPD. The DCPD now was added as soon as the temperature had reached 170°C. However, already well before the temperature had reached 170°C and the Diels-Alder reaction with DCPD was started, the diacrylate turned into a gel and reaction with DCPD could not change the gellified status.

### Example 2: Synthesis of a telechelic norbornene and backbone HIMIC-functional resin Resin B

### 2.a Synthesis of an intermediate resin, Resin Bᵢₙₜ₁

A reaction flask equipped with a stirrer, reflux condenser and nitrogen purge was charged with 1302 g of ethylene glycol, 880 g of MA and 0,5 g of DBH. The reaction mixture was heated to 100 °C and kept at that temperature during 2 hours after which it was heated to 170 °C and kept at 170°C for 2 hours. The mixture was cooled to 100 °C and 650 g of DCPD was added. Next the reaction mixture was heated to 180°C and kept at that temperature during 6 hours. After evaporation of the excess CPD under reduced pressure a clear resin was obtained. The intermediate resin, Resin Bᵢₙₜ₁, contained in the backbone 1 RU (Diels-Alder adduct of CPD with a maleic ester) and a W_{RU} of 285 D.

### 2.b Synthesis of a second intermediate resin, Resin Bᵢₙₜ₂

A reaction flask equipped with a stirrer, Dean-Stark set-up and nitrogen purge was charged with 270 g of intermediate Resin Bᵢₙₜ₁, 145 g of acrylic acid, 80 g of toluene, 4 g of pTSA, 0,5 g of DBH and 0,5 g of U626, after which the reaction flask was heated till reflux and the water separated in the Dean-Stark set-up. After 4 hours no further water was removed via the azeotropic separation. The mixture was stirred for another hour and the toluene was removed under vacuum resulting in a second intermediate resin, Resin B_{int2.}

### 2.c Synthesis of Resin B

The Dean-Stark set-up was replaced with a reflux condenser and 86 g of DCPD was added to the obtained intermediate, Resin Bᵢₙₜ₂. The reaction mixture was heated under stirring to 170°C and kept at 170°C for 4 hours. Next the excess DCPD was removed *in vacuo* after which Resin B was obtained containing 2 telechelic RUs and 1 RU in the backbone. The W_{RU} is 220 D.

### Example 3: Synthesis of a branched norbornene functional resin Resin C

A reaction flask equipped with a stirrer, reflux condenser and nitrogen purge was charged with 100 g of ethoxylated trimethylolpropane triacrylate, 22 g of DCPD and 0,1 g of DBH and 0,1 g of U626. The reaction mixture was heated under stirring to 170°C and kept at 170°C for 2 hours. After evaporation of the excess CPD under reduced pressure a clear resin was obtained. The obtained resin, Resin C, contained 3 norbornene functionalities and a W_{RU} of 370 D.

### Example 4: Synthesis of a crotonyl functional resin, Resin D

A reaction flask equipped with a stirrer, Dean-Stark set-up and nitrogen purge was charged with 800 g of ethoxylated bisphenol-A, 440 g of crotonic acid, 250 g of toluene, 12 g of pTSA, 0,5 g of DBH and 0,5 g of U626, after which the reaction flask was heated till reflux and the water separated in the Dean-Stark set-up. After 6 hours no further water was removed via the azeotropic separation. The mixture was stirred for another hour and the toluene was removed under vacuum resulting in Resin D with 2 telechelic croton reactive unsaturations with a W_{RU} of 290 D.

### Example 5: Synthesis of a crotonyl based norbornene resin, Resin E

The synthesis of Resin D was repeated and after the evaporation of the toluene the Dean-Stark set-up was replaced with a reflux condenser. 260 g of DCPD, 1,1 g of DBH and 1,1 g of U626 were added, after which the mixture was heated to 170°C and kept at 170 °C for 3 hours. After evaporation of the excess of CPD under reduced pressure a clear resin was obtained. The resin, Resin E, contained 2 bicyclic RUs and had a W_{RU} of 315 D.

### Example 6: Synthesis of a maleate functional resin, Resin F

A reaction flask equipped with a stirrer, Dean-Stark set-up and nitrogen purge was charged with 606 g of ethoxylated bisphenol-A and 294 g of maleic anhydride and 220 g of toluene. The mixture was heated to 125°C and kept at 125 °C for 1 hour. 1 g of pTSA, 0,5 g of DBH, 0,5 g of U626, 100 g of toluene and 244 g of butanol were added, after which the reaction flask was heated till reflux and the water was separated in the Dean-Stark set-up. After 3 hours no further water was removed via the azeotropic separation. The mixture was stirred for another hour before 6,5 g of TMPₒₓ was added and the mixture was stirred for 30 min. The toluene was removed under vacuum, resulting in Resin F with 2 telechelic maleate RUs and having a W_{RU} of 315 D.

### Example 7: Synthesis of a HIMIC-functional resin, Resin G

The synthesis of Resin F was repeated. After the evaporation of toluene the Dean-Stark set-up was replaced with a reflux condenser. 200 g of DCPD, 0,5 g of DBH and 0,5 g of U626 were added, after which the mixture was heated to 170°C and kept at 170 °C for 2 hours. After evaporation of the excess of CPD under reduced pressure a clear resin was obtained. The resin, Resin G, contained 2 bicyclic RUs and had a W_{RU} of 380 D.

### Example 8: Synthesis of a branched norbomene-telechelic, backbone RU-functional resin, Resin H

A reaction flask equipped with a stirrer, Dean-Stark set-up, nitrogen purge and vacuum set-up was charged with 152 g of tetrahydrophthalic acid anhydride, 550 g of ethoxylated trimethylol propane, 302 g of acrylic acid, 1 g of DBH, 1 g of trinonyl phosphite, 10 g of pTSA and 150 g of toluene were added, after which the reaction flask was heated till reflux at 115°C under 900 mbar pressure, and the water was separated in the Dean-Stark set-up. After 6 hours no further water was removed via the azeotropic separation. The mixture was stirred for another hour before 10 g of TMPₒₓ was added and the mixture was stirred for 30 min. The toluene was removed under vacuum resulting in intermediate I_{H}.

The Dean-Stark set-up was replaced with a reflux condenser and 80 g of DCPD was added per 250 g of intermediate I_{H}. The reaction mixture was heated under stirring to 170°C and kept at 170 °C for 4 hours. Next, the excess of DCPD was removed *in vacuo* after which a resin, Resin H, was obtained, containing 4 telechelic RUs and 1 RU in the backbone and having a branching number of 2. The W_{RU} was 235 D.

### Example 9: Synthesis of a HIMIC-functional resin, Resin I

A reaction flask equipped with a stirrer, reflux condenser and nitrogen purge was charged with 483 g of bicyclo-[2.2.1]-hept-5-ene-2,3-carboxylic anhydride and 112 g of propylene glycol. The reaction mixture was heated under stirring to 200 °C and kept at 200 °C 2 hours, after which 1 g of Fascat^{®} 4101 (an organo-tin based transesterification catalyst from Atofina Chemicals Inc., USA), 1 g of DBH and 1 g of U626 was added, followed by 450 g of propylene glycol. The reaction was kept under stirring at 200°C for an additional 7 hours, before cooling to room temperature, after which a resin, Resin I, containing on average 2 RUs per molecule was obtained with a W_{RU} of 280 D.

### Example 10: Synthesis of a propargyl-functional resin, Resin J

A reaction flask equipped with a stirrer, reflux condenser and nitrogen purge was charged with 444 g of isophorone diisocyanate (IPDI) and 0,1 g of dibutyltin dilaurate, after which 112 g of propargyl acohol was added dropwise at such a rate that the temperature was kept below 40°C. After addition of the propargyl alcohol the reaction mixture was stirred for 30 min before the temperature was raised to 70 °C. Next, 1000 g of polyTHF1000 was added during 30 min and the reaction mixture was kept at 70 °C during 2 hours. After cooling down a resin, Resin J, was obtained containing 2 telechelic RUs with a functionality of 2 and a W_{RU} of 780 D.

Examples 1, 3, 5, 7 and 8, in comparison with Example A, clearly demonstrate the usefulness of the new and inventive synthetic procedure for the Diels-Alder reaction of a telechelic unsaturation with CPD via *in situ* cracking of DCPD.

### Part B: Curing of resins

### B.1 Thermal curing

The formulations for thermal curing were prepared by mixing the components, with stirring, for 1 minute, in amounts as indicated in table 1 for Experiments 1-7 below. The mixtures obtained then were poured into an aluminium disk, which then was placed in an oven for 1 hour. The effect of curing then was assessed by the formation of solid material.

**Table 1**

| Experiment | Resin (W_{RU}) | I PMP (W_{XH}=120D) | accelerator |
|---|---|---|---|
| | the figures below indicate parts by weight | | |
| 1 | A (320 D) | | M50 |
| | 30 | 10 | 0,5 |
| 2 | B (220 D) | | ph.ac. + bzpl |
| | 15 | 5 | 0,06 + 0,2 |
| 3 | B 25 | 10 | M50 0,6 |
| 4 | B 9 | 5 | ph.ac. + bzpl 0,06 + 0,2 |
| 5 | A + C (370 D) | | M50 |
| | 20+10 | 10 | 0,6 |
| 6 | D (290 D) | | M50 |
| | 30 | 10 | 0,6 |
| 7 | E (315 D) | | M50 |
| | 30 | 10 | 0,6 |

In all experiments, upon the one-hour curing step, a solid hard material was obtained.

Experiments 1-7 demonstrate that thermal cure according to the invention results in solid hard materials for a broad range of the ratio of RUs and XHs. Indeed mixtures of resins and various curing systems can also be applied in thermal curing according to the invention.

### B.2 Cold curing

The formulations for cold curing were prepared by mixing the components, as indicated in the tables below, in a plastic beaker. The cure was monitored with a thermocouple. The peak temperature gives a good indication of the cure. The results are summarized in the next tables for the respective Experiments (Table 2 for Experiments 8A-F; Table 3 for Experiments 9A-G; Table 4 for Experiments 10A-D; Table 5 for Experiments 11A-G; Table 6 for Experiments 12A-D).

### Experiments 8A-F: Cold curing with Resin A and PMP

**Table 2**

| | Experiment | | | | | |
|---|---|---|---|---|---|---|
| | 8A | 8B | 8C | 8D | 8E | 8F |
| | the figures below indicate parts by weight | | | | | |
| Resin A | 50 | 50 | 75 | 75 | 75 | 75 |
| PMP | 50 | 50 | 25 | 25 | 25 | 25 |
| M50 | 2 | 6 | 6 | 2 | 6 | 6 |
| NL-49 | - | 3 | 3 | - | - | - |
| VN-2 | 1 | - | - | 1 | 1 | 1 |
| Pyruvic acid | 0,25 | | | 0,25 | 0,25 | |
| peak temp (°C) | 105 | 113 | 111 | 98 | 120 | 130 |

These experiments 8A-F clearly show that cold curing can be achieved according to the invention, by means of various curing methods (e.g. using cobalt or vanadium in combination with a hydroperoxide), and at varying ratios of RUs and XHs.

### Experiments 9A-G: Cold curing with Resin B and PMP

**Table 3**

| | Experiment | | | | | | |
|---|---|---|---|---|---|---|---|
| | 9A | 9B | 9C | 9D | 9E | 9F | 9G |
| | the figures below indicate parts by weight | | | | | | |
| Resin B | 66 | 66 | 75 | 75 | 75 | 75 | 75 |
| PMP | 34 | 34 | 25 | 25 | 25 | 25 | 25 |
| M50 | 6 | 4 | 6 | - | - | - | 6 |
| VN-2 | 0,5 | 0,5 | 0,5 | - | - | - | - |
| Mn | - | - | - | - | - | - | 3 |
| 20S | - | - | - | 20 | 20 | 20 | - |
| DIPT | - | - | - | 3 | 2 | 2 | - |
| DBH | - | - | - | - | - | 1 | - |
| peak temp (°C) | 160 | 107 | 140 | 110 | 105 | 96 | 150 |

These experiments 9A-G show that cold curing can be achieved using various peroxides; it is also shown that manganese in combination with a hydroperoxide or an amine in combination with benzoyl peroxide van be applied. Furthermore experiment 9F shows that curing can be performed in the presence of an inhibitor.

### Experiments 10A-D: Curing of Resin I with PMP in the presence of an inhibitor

**Table 4**

| | Experiment | | | |
|---|---|---|---|---|
| | 10A | 10B | 10C | 10D |
| | the figures below indicate parts by weight | | | |
| Resin I | 75 | 75 | 75 | 75 |
| PMP | 25 | 25 | 25 | 25 |
| M50 | 6 | 6 | 6 | 6 |
| Mn | 3 | 3 | 3 | 3 |
| phenothiazine | 0 | 0,1 | 0,5 | 1 |
| gel time (min) DIN 16945 | 3,5 | 4 | 6,9 | 8,3 |

Experiments 10A-D clearly demonstrate that the gel time can be adjusted using inhibitors.

### Experiments 11 A-G: cold curing of various resins with different XH-components, and at different molar ratios of RUs versus XH-groups

**Table 5**

| | Resin | XH comp. | DMPT | 20S | metal | M50 | Tpeak °C | ratio RU/XH |
|---|---|---|---|---|---|---|---|---|
| | the figures below indicate parts by weight | | | | | | | |
| 11A | A | PMP | - | - | Mn | 6 | 120 | 1,1/1 |
| | 75 | 25 | | | 3 | | | |
| 11B | C | TMP | - | - | VN-2 | 6 | 130 | 0,9/1 |
| | 71 | 29 | | | 1 | | | |
| 11C | D | PMP | - | - | VN-2 | 6 | 100 | 0.4/1 |
| | 50 | 50 | | | 1 | | | |
| 11D | E | TMP | (2,5) | 30 | - | - | 100 | 1/1 |
| | 71 | 29 | | | | | | |
| 11E | F | TMP | - | - | VN-2 | 6 | 110 | 0,55/1 |
| | 57 | 43 | | | 1 | | | |
| 11F | H | PMP | - | - | Mn | 6 | 115 | 1/1 |
| | 66 | 34 | | | 3 | | | |
| 11G | J | PMA | - | - | Mn | 6 | 100 | 0,27/1 |
| | 67 | 33 | | | 3 | | | |

### Experiment 11H:

Experiment 11F was repeated (Resin H, 66 parts; PMP 34 parts) with a sample of material having a thickness of 5 cm. Cold curing resulted in a fully cured product, throughout the whole depth (5 cm) of the material layer.

Accordingly, experiments 11A-H demonstrate that cold curing of various resins with different XH-components, and at different molar ratios of RUs versus XH-groups, leads to excellent results.

### Experiments 12 A-D: Curing with mixtures of Resins and a reactive diluent (TEGDVE), copolymerisable with at least one of such Resins

**Table 6**

| | First resin | Second resin | TEGDVE | TMP | VN-2 | M50 | peak temp °C |
|---|---|---|---|---|---|---|---|
| Expmt. | the figures below indicate amounts in grams | | | | | | |
| 12A | A | F | 2 | 10 | 0,5 | 6 | 100 |
| | 10 | 8 | | | | | |
| 12B | B | F | 2 | 10 | 0,5 | 6 | 118 |
| | 10 | 8 | | | | | |
| 12C | E | F | 2 | 10 | 0,5 | 6 | 105 |
| | 10 | 8 | | | | | |
| 12D | G | F | 2 | 10 | 0,5 | 6 | 120 |
| | 10 | 8 | | | | | |

It can clearly be seen, that copolymerisation does not have a negative effect on the curing for different types of resins in the presence of a reactive diluent.

### C. Comparative experiments

### Comparative experiment A1:

A mixture of 53 parts of Resin A (2 RUs) and 20 parts of BMP (2 XHs), i.e. at a ratio of RU versus XH of 1 : 1, was subjected to cold curing as in Experiment 11 A.

No network formation was observed; the resulting cured product had no strength and appeared to be a weak polymer.

### Comparative experiment A2:

A mixture of 53 parts of Resin A (2 RUs) and 20 parts of BMP (2 XHs), i.e. at a ratio of RU versus XH of 1 : 1, was subjected to thermal curing as in Experiment 1.

No network formation was observed; the resulting cured product had no strength and appeared to be a weak polymer.

### Comparative experiment B:

A mixture of 40 parts of Resin E, 40 parts of TMP and 20 parts of styrene was subjected to cold curing as in Experiment 11A. Curing was very slow and poor; the peak temperature did not reach 40°C. The resulting cured product had no strength at all and appeared to be a weak polymer.

### Comparative experiment C:

Experiment 11H was repeated (Resin H, 66 parts; PMP, 34 parts), but now in the presence of a photoinitiator, namely 1 wt.% of Irgacure® 184 (Ciba; Switzerland) with a sample of material having a thickness of 1 cm, and with photocuring under influence of an energy input of 2 J/cm² using Fusion F600 D-bulbs. This curing resulted in a fully cured product at the top 1 mm layer of the material, whereas the bottom 9 mm part remained liquid, and thus had remained fully uncured.

### Comparative experiment D:

A mixture of 52 parts of Resin D, 38 parts of PMP, and 10 parts of methylacrylate were subjected to cold curing with 6% of M50 and 3 parts of Mn as in Experiment 11A. This resulted in a soft gelly material after 10 minutes.

## Claims

1. Resin composition for radical curing comprising a component containing reactive carbon-carbon unsaturations ("RU component") and a component containing XH-groups ("XH-component") with X not being C or O,
**characterized in that**
a. the resin composition is substantially free of photoinitiators; and
b. the average number of reactive carbon-carbon unsaturations of the RU component is higher than 2; and
c. at least one of the XH-groups of the XH-component is a thiol group, and the average number of XH-groups of the XH-component is equal to or higher than 2; and whereby
d. at least one of the average numbers of the unsaturations, respectively of the XH-groups is higher than 2; and
e. at most 5 mol% of the reactive unsaturations is capable of undergoing homopolymerisation; and
f. at most 5 mol% of the reactive unsaturations is present in the form of a mono-ene functional alkylene; and
g. the molar ratio of the XH-groups and of the reactive unsaturations is in the range of from 4:1 to 1:4;
with the proviso that the RU component is not tris-(norbom-5-ene-2-carboxy) propoxypropane.

2. Resin composition according to claim 1, **characterized in that** at least one of the average numbers of the reactive carbon-carbon unsaturations, respectively of the XH-groups is higher than 2,5.

3. Resin composition according to claim 1 or 2, **characterized in that** at least one of the average numbers of the reactive carbon-carbon unsaturations, respectively of the XH-groups is higher than 3.

4. Resin composition according to any of claims 1 to 3, **characterized in that** the molar ratio of the XH-groups and of the reactive carbon-carbon unsaturations is in the range of from 1,5 : 1 to 1 : 1,5.

5. Resin composition according to claim 4, **characterized in that** the average functionality per RU of the reactive carbon-carbon unsaturations is in the range between 1 and 2.

6. Resin composition according to any of claims 1 to 5, **characterized in that** the XH-groups are present in an XH-component or a mixture of XH-components having an average number of XH-groups per mol equal to or higher than 3.

7. Resin composition according to any of claims 1 to 6, **characterized in that** the XH-groups are present in a XH-component having an average number of XH-groups per mol equal to or higher than 4.

8. Resin composition according to any of claims 1 to 7, **characterized in that** the average number of the reactive carbon-carbon unsaturations is equal to or higher than 2,5.

9. Resin composition according to claim 8, **characterized in that** the average number of the reactive carbon-carbon unsaturations is equal to or higher than 3.

10. Resin composition according to claim 9, **characterized in that** the average number of the reactive carbon-carbon unsaturations is equal to or higher than 4.

11. Resin composition according to any of claims 1 to 10, **characterized in that** the aggregate average of the average number of the reactive carbon-carbon unsaturations and of the average number of XH-groups is equal to or higher than 2,5.

12. Resin composition according to claim 11, **characterized in that** the aggregate average of the average number of the reactive carbon-carbon unsaturations and of the average number of XH-groups is equal to or higher than 3.

13. Resin composition according to any of claims 1 to 12, **characterized in that** the mol% of reactive carbon-carbon unsaturations capable of undergoing homopolymerisation is in the range of from 0 to 1 mol%.

14. Resin composition according to any of claims 1 to 13, **characterized in that** the mol% of reactive carbon-carbon unsaturations present in the form of a mono-ene functional alkylene is in the range of from 0 to 1 mol%.

15. Resin composition according to any of claims 1 to 14, **characterized in that** the XH-component is selected from the group of thiol-, phosphine- and amine-components.

16. Resin composition according to claim 15, **characterized in that** at least one of the XH-groups in the XH-component is a thiol group.

17. Resin composition according to any of claims 1 to 16, **characterized in that** the XH-component is an aliphatic thiol component.

18. Resin composition according to claim 17, **characterized in that** the thiol component is selected from the group of α-mercapto acetate esters and/or β-mercapto propionate esters of mono-alcohols, diols, triols, tetraols, pentaols and other polyols, and/or of derivatives of mercaptopropalkyl-trialkoxysilane compounds.

19. Resin composition according to any of claims 1 to 18, **characterized in that** the part of reactive carbon-carbon unsaturations present in the backbone of the component containing reactive carbon-carbon unsaturations corresponds to at least an average number of reactive carbon-carbon unsaturations equal to or higher than 1.

20. Resin composition according to any of claims 1 to 17, **characterized in that** the part of reactive carbon-carbon unsaturations present in a C₅₋₁₂ cyclic or heterocyclic structure, preferably a C₇₋₉ cyclic or heterocyclic structure, corresponds to at least an average number of reactive carbon-carbon unsaturations equal to or higher than 1.

21. Resin composition according to claim 20, **characterized in that** the said part of reactive carbon-carbon unsaturations is present in a C₅₋₁₂ carbocyclic structure, preferably a C₇₋₉ carbocyclic structure.

22. Resin composition according to claim 21, **characterized in that** the said part of reactive carbon-carbon unsaturations is present in a C₅₋₁₂ bicyclic structure, preferably a C₇₋₉ bicyclic structure.

23. Resin composition according to any of claims 1 to 22, **characterized in that** the part of reactive carbon-carbon unsaturations present in a telechelic position in the component containing reactive carbon-carbon unsaturations corresponds to at least an average number of reactive carbon-carbon unsaturations equal to or higher than 1.

24. Resin composition according to any of claims 1 to 23, **characterized in that** at least part of the component containing reactive carbon-carbon unsaturations has a branching number equal to or higher than 1.

25. Resin composition according to any of claims 1 to 24, **characterized in that** the component containing the reactive carbon-carbon unsaturations is selected from the groups of
(i) fumaric, maleic, mesaconic, crotonic, cinnamic and/or sorbic acid esters or amides and/or Diels-Alder adducts thereof with diene compounds; and
(ii) Diels-Alder adducts of acrylic, methacrylic or itaconic acid esters or amides with diene compounds; and
(iii) 5-membered rings ethylenic dicyclopentadiene compounds.

26. Resin composition according to claim 25, **characterized in that** the Diels-Alder adduct is an adduct with butadiene or cyclopentadiene.

27. Resin composition according to any of claims 1 to 26, **characterized in that**, in addition to the component containing reactive carbon-carbon unsaturations, also a reactive diluent containing reactive carbon-carbon unsaturations is present in an amount of at most 25 wt.% of the component containing the reactive carbon-carbon unsaturations.

28. Resin composition according to any of claims 1 to 27, **characterized in that**, at least for part of the reactive carbon-carbon unsaturations in the component containing such unsaturations, the functionality of the reactive unsaturations is higher than 2.

29. Resin composition according to any of claims 1 to 28, **characterized in that** the resin composition comprises a mixture of reactive carbon-carbon unsaturations containing components of which at most 50 mol.% of the reactive unsaturations is copolymerisable, preferably at most 30 mol.%.

30. Resin composition according to any of claims 1 to 29, **characterized in that** the average molecular weight of the component containing the reactive carbon-carbon unsaturations, and excluding the optional reactive carbon-carbon unsaturations from the reactive diluent, is in the range of at least 500, preferably at least 1000, more preferably at least 2000 and at most 15000 Dalton.

31. Resin composition according to any of claims 1 to 30, **characterized in that** average molecular weight per carbon-carbon reactive unsaturation present in the summed mass of the component containing reactive carbon-carbon unsaturations and of the reactive diluent is 150 Dalton, or higher.

32. Resin composition according to any of claims 1 to 31, **characterized in that** the average molecular weight of the XH-component is in the range of at least 200, preferably at least 300 and at most 2500 Dalton.

33. Resin composition according to any of claims 1 to 32, **characterized in that** average molecular weight per XH-group present in the XH-component is 100 or higher.

34. Resin composition according to any of claims 1 to 33, **characterized in that** the resin composition also contains an inhibitor in an amount of 0,00001 to 5,0 wt.% calculated with respect to the total mass of reactive carbon-carbon unsaturations and XH-groups containing components.

35. Resin composition according to any of claims 1 to 34, **characterized in that** the resin composition also contains an accelerator in an amount of 0,00001 to 5,0 wt.% calculated with respect to the total mass of reactive carbon-carbon unsaturations and XH-groups containing components.

36. Resin composition according to claim 35, **characterized in that** the accelerator is either an amine when used for curing in combination with a perester and/or peranhydride compound as initiator for the curing, or a soluble salt or complex of single metals or mixtures thereof selected from any of cobalt, vanadium, copper, iron, manganese or titanium when used for curing in combination with any other peroxide as initiator for the curing.

37. Resin composition according to any of claims 1 to 36, **characterized in that** the resin composition is capable of being cured with a peroxide initiator, preferably a peroxide selected from the group of liquid peroxides and (solid) benzoyl peroxide.

38. Process for the radical curing of a resin composition according to any of claims 1 to 37, **characterized in that** the resin composition is treated - at a suitable temperature - with a peroxide, an azo compound, or a benzopinacol.

39. Process for radical curing according to claim 38, **characterized in that** the curing is performed starting from a two-component resin composition system according to any of the following embodiments:
a. a first component comprising the component containing reactive carbon-carbon unsaturations, and the XH-groups containing component, and optionally a reactive diluent; and a second component comprising a peroxide;
b. a first component comprising the component containing reactive carbon-carbon unsaturations, and optionally a reactive diluent; and a second component comprising the XH-groups containing component and a peroxide;
c. a first component comprising the XH-groups containing component; and a second component comprising a peroxide and the component containing the reactive carbon-carbon unsaturations, and optionally a reactive diluent, provided that in this embodiment c. the component containing reactive carbon-carbon unsaturations is substantially free of homopolymerisable and/or copolymerisable reactive carbon-carbon unsaturations.

40. Process for radical curing according to any of claims 38 or 39, **characterized in that**
the curing is effected at a temperature in the range of from -20 to +200 °C, preferably in the range of from -20 to +100 °C, and most preferably in the range of from -10 to +60 °C.

41. Process for the synthesis of a Diels-Alder adduct component from reaction of cyclopentadiene with a resin component containing at least one telechelic carbon-carbon unsaturation, **characterized in that**
in a first step dicyclopentadiene is added at a temperature well below 150 °C to an unsaturated polyester resin component having at least one telechelic carbon-carbon unsaturation per molecule in an amount of at least 0,5 mol of dicyclopentadiene per mol of telechelic carbon-carbon unsaturated bonds in said unsaturated polyester resin starting material, and that
in a second step the mixture obtained in the first step is heated to a temperature in the range of from 150 to 180 °C; and is allowed to react for a time sufficient for conversion of the telechelic carbon-carbon unsaturated bonds in the unsaturated polyester resin starting material; and
finally the excess of dicyclopentadiene and cyclopentadiene is removed by evaporation.

42. Process according to claim 41, **characterized in that**
the telechelic carbon-carbon unsaturated bond is a (meth)acrylic bond.

## Patentansprüche

1. Harzzusammensetzung zur radikalischen Härtung, umfassend eine Komponente mit reaktiven Kohlenstoff-Kohlenstoff-Ungesättigtheiten ("RU-Komponente") und eine Komponente mit XH-Gruppen ("XH-Komponente"), wobei X nicht für C oder O steht, **dadurch gekennzeichnet, daß**
a. die Harzzusammensetzung weitgehend frei von Photoinitiatoren ist und
b. die durchschnittliche Zahl reaktiver Kohlenstoff-Kohlenstoff-Ungesättigtheiten der RU-Komponente größer als 2 ist und
c. mindestens eine der XH-Gruppen der XH-Komponente eine Thiolgruppe ist und die durchschnittliche Zahl von XH-Gruppen der XH-Komponente größer gleich 2 ist und
d. mindestens eine der durchschnittlichen Zahlen der Ungesättigtheiten bzw. der XH-Gruppen größer als 2 ist und
e. höchstens 5 Mol-% der reaktiven Ungesättigtheiten homopolymerisationsfähig sind und
f. höchstens 5 Mol-% der reaktiven Ungesättigtheiten in Form eines mono-en-funktionellen Alkylens vorliegen und
g. das Molverhältnis der XH-Gruppen und der reaktiven Ungesättigtheiten im Bereich von 4 : 1 bis 1 : 4 liegt;
mit der Maßgabe, daß es sich bei der RU-Komponente nicht um Tris(norborn-5-en-2-carboxy)propoxypropan handelt.

2. Harzzusammensetzung nach Anspruch 1, **dadurch gekennzeichnet, daß** mindestens eine der durchschnittlichen Zahlen der reaktiven Kohlenstoff-Kohlenstoff-Ungesättigtheiten bzw. der XH-Gruppen größer als 2,5 ist.

3. Harzzusammensetzung nach Anspruch 1 oder 2, **dadurch gekennzeichnet, daß** mindestens eine der durchschnittlichen Zahlen der reaktiven Kohlenstoff-Kohlenstoff-Ungesättigtheiten bzw. der XH-Gruppen größer als 3 ist.

4. Harzzusammensetzung nach einem der Ansprüche 1 bis 3, **dadurch gekennzeichnet, daß** das Molverhältnis der XH-Gruppen und der reaktiven Kohlenstoff-Kohlenstoff-Ungesättigtheiten im Bereich von 1,5 : 1 bis 1 : 1,5 liegt.

5. Harzzusammnesetzung nach Anspruch 4, **dadurch gekennzeichnet, daß** die durchschnittliche Funktionalität der reaktiven Kohlenstoff-Kohlenstoff-Ungesättigtheiten pro RU im Bereich zwischen 1 und 2 liegt.

6. Harzzusammensetzung nach einem der Ansprüche 1 bis 5, **dadurch gekennzeichnet, daß** die XH-Gruppen in einer XH-Komponente oder einer Mischung von XH-Komponenten mit einer durchschnittlichen Zahl von XH-Gruppen pro mol größer gleich 3 vorliegen.

7. Harzzusammensetzung nach einem der Ansprüche 1 bis 6, **dadurch gekennzeichnet, daß** die XH-Gruppen in einer XH-Komponente mit einer durchschnittlichen Zahl von XH-Gruppen pro mol größer gleich 4 vorliegen.

8. Harzzusammensetzung nach einem der Ansprüche 1 bis 7, **dadurch gekennzeichnet, daß** die durchschnittliche Zahl der reaktiven Kohlenstoff-Kohlenstoff-Ungesättigtheiten größer gleich 2,5 ist.

9. Harzzusammensetzung nach Anspruch 8, **dadurch gekennzeichnet, daß** die durchschnittliche Zahl der reaktiven Kohlenstoff-Kohlenstoff-Ungesättigtheiten größer gleich 3 ist.

10. Harzzusammensetzung nach Anspruch 9, **dadurch gekennzeichnet, daß** die durchschnittliche Zahl der reaktiven Kohlenstoff-Kohlenstoff-Ungesättigtheiten größer gleich 4 ist.

11. Harzzusammensetzung nach einem der Ansprüche 1 bis 10, **dadurch gekennzeichnet, daß** der Gesamtdurchschnitt der durchschnittlichen Zahl der reaktiven Kohlenstoff-Kohlenstoff-Ungesättigtheiten und der durchschnittlichen Zahl von XH-Gruppen größer gleich 2,5 ist.

12. Harzzusammensetzung nach Anspruch 11, **dadurch gekennzeichnet, daß** der Gesamtdurchschnitt der durchschnittlichen Zahl der reaktiven Kohlenstoff-Kohlenstoff-Ungesättigtheiten und der durchschnittlichen Zahl von XH-Gruppen größer gleich 3 ist.

13. Harzzusammensetzung nach einem der Ansprüche 1 bis 12, **dadurch gekennzeichnet, daß** der Mol-%-Anteil homopolymerisationsfähiger reaktiver Kohlenstoff-Kohlenstoff-Ungesättigtheiten im Bereich von 0 bis 1 Mol-% liegt.

14. Harzzusammensetzung nach einem der Ansprüche 1 bis 13, **dadurch gekennzeichnet, daß** der Mol-%-Anteil reaktiver Kohlenstoff-Kohlenstoff-Ungesättigtheiten, die in Form eines mono-en-funktionellen Alkylens vorliegen, im Bereich von 0 bis 1 Mol-% liegt.

15. Harzzusammensetzung nach einem der Ansprüche 1 bis 14, **dadurch gekennzeichnet, daß** die XH-Komponente aus der Gruppe der Thiol-, Phosphin- und Aminkomponenten ausgewählt ist.

16. Harzzusammensetzung nach Anspruch 15, **dadurch gekennzeichnet, daß** mindestens eine der XH-Gruppen in der XH-Komponente eine Thiolgruppe ist.

17. Harzzusammensetzung nach einem der Ansprüche 1 bis 16, **dadurch gekennzeichnet, daß** die XH-Komponente eine aliphatische Thiolkomponente ist.

18. Harzzusammensetzung nach Anspruch 17, **dadurch gekennzeichnet, daß** die Thiolkomponente aus der Gruppe der α-Mercaptoacetatester und/oder β-Mercaptopropionatester von Monoalkoholen, Diolen, Triolen, Tetraolen, Pentaolen und anderen Polyolen und/oder der Derivate von Mercaptopropalkyltrialkoxysilanverbindungen ausgewählt ist.

19. Harzzusammensetzung nach einem der Ansprüche 1 bis 18, **dadurch gekennzeichnet, daß** der Teil der reaktiven Kohlenstoff-Kohlenstoff-Ungesättigtheiten, der im Gerüst der Komponente mit reaktiven Kohlenstoff-Kohlenstoff-Ungesättigtheiten vorliegt, mindestens einer durchschnittlichen Zahl von reaktiven Kohlenstoff-Kohlenstoff-Ungesättigtheiten größer gleich 1 entspricht.

20. Harzzusammensetzung nach einem der Ansprüche 1 bis 17, **dadurch gekennzeichnet, daß** der Teil der reaktiven Kohlenstoff-Kohlenstoff-Ungesättigtheiten, der in einer cyclischen oder heterocylischen C₅₋₁₂-Struktur, vorzugsweise einer cyclischen oder heterocylischen C₇₋₉-Struktur, vorliegt, mindestens einer durchschnittlichen Zahl von reaktiven Kohlenstoff-Kohlenstoff-Ungesättigtheiten größer gleich 1 entspricht.

21. Harzzusammensetzung nach Anspruch 20, **dadurch gekennzeichnet, daß** der Teil der reaktiven Kohlenstoff-Kohlenstoff-Ungesättigtheiten in einer carbocyclischen C₅₋₁₂-Struktur, vorzugsweise einer carbocyclischen C₇₋₉-Struktur, vorliegt.

22. Harzzusammensetzung nach Anspruch 21, **dadurch gekennzeichnet, daß** der Teil der reaktiven Kohlenstoff-Kohlenstoff-Ungesättigtheiten in einer bicyclischen C₅₋₁₂-Struktur, vorzugsweise einer bicyclischen C₇₋₉-Struktur, vorliegt.

23. Harzzusammensetzung nach einem der Ansprüche 1 bis 22, **dadurch gekennzeichnet, daß** der Teil der reaktiven Kohlenstoff-Kohlenstoff-Ungesättigtheiten, der in einer telechelen Position in der Komponente mit reaktiven Kohlenstoff-Kohlenstoff-Ungesättigtheiten vorliegt, mindestens einer durchschnittlichen Zahl von reaktiven Kohlenstoff-Kohlenstoff-Ungesättigtheiten größer gleich 1 entspricht.

24. Harzzusammensetzung nach einem der Ansprüche 1 bis 23, **dadurch gekennzeichnet, daß** zumindest ein Teil der Komponente mit reaktiven Kohlenstoff-Kohlenstoff-Ungesättigtheiten eine Verzweigungszahl größer gleich 1 aufweist.

25. Harzzusammensetzung nach einem der Ansprüche 1 bis 24, **dadurch gekennzeichnet, daß** die Komponente mit reaktiven Kohlenstoff-Kohlenstoff-Ungesättigtheiten aus den Gruppen der
(i) Fumarsäure-, Maleinsäure-, Mesaconsäure-, Crotonsäure-, Zimtsäure- und/oder Sorbinsäureester oder -amide und/oder Diels-Alder-Addukte davon mit Dienverbindungen und
(ii) Diels-Alder-Addukte von Acrylsäure-, Methacrylsäure- oder Itaconsäureester oder -amide mit Dienverbindungen und
(iii) ethylenischen Dicyclopentadienverbindungen mit 5-gliedrigen Ringen
ausgewählt ist.

26. Harzzusammensetzung nach Anspruch 25, **dadurch gekennzeichnet, daß** es sich bei dem Diels-Alder-Addukt um ein Addukt mit Butadien oder Cyclopentadien handelt.

27. Harzzusammensetzung nach einem der Ansprüche 1 bis 26, **dadurch gekennzeichnet, daß** neben der Komponente mit reaktiven Kohlenstoff-Kohlenstoff-Ungesättigtheiten auch ein reaktives Verdünnungsmittel mit reaktiven Kohlenstoff-Kohlenstoff-Ungesättigtheiten in einer Menge von höchstens 25 Gew.-%, bezogen auf die Komponente mit den reaktiven Kohlenstoff-Kohlenstoff-Ungesättigtheiten, vorliegt.

28. Harzzusammensetzung nach einem der Ansprüche 1 bis 27, **dadurch gekennzeichnet, daß** zumindest für einen Teil der reaktiven Kohlenstoff-Kohlenstoff-Ungesättigtheiten in der Komponente mit derartigen Ungesättigtheiten die Funktionalität der reaktiven Ungesättigtheiten größer als 2 ist.

29. Harzzusammensetzung nach einem der Ansprüche 1 bis 28, **dadurch gekennzeichnet, daß** die Harzzusammensetzung eine Mischung von reaktive Kohlenstoff-Kohlenstoff-Ungesättigtheiten enthaltenden Komponenten umfaßt, wobei höchstens 50 Mol-% der reaktiven Ungesättigtheiten copolymerisierbar sind, vorzugsweise höchstens 30 Mol-%.

30. Harzzusammensetzung nach einem der Ansprüche 1 bis 29, **dadurch gekennzeichnet, daß** das durchschnittliche Molekulargewicht der Komponente mit den reaktiven Kohlenstoff-Kohlenstoff-Ungesättigtheiten unter Ausschluß der fakultativen reaktiven Kohlenstoff-Kohlenstoff-Ungesättigtheiten aus dem reaktiven Verdünnungsmittel im Bereich von mindestens 500, vorzugsweise mindestens 1000, besonders bevorzugt mindestens 2000 und höchstens 15000 Dalton liegt.

31. Harzzusammensetzung nach einem der Ansprüche 1 bis 30, **dadurch gekennzeichnet, daß** das durchschnittliche Molekulargewicht pro reaktive Kohlenstoff-Kohlenstoff-Ungesättigtheit, die in der summierten Masse der Komponente mit reaktiven Kohlenstoff-Kohlenstoff-Ungesättigtheiten und des reaktiven Verdünnungsmitttels vorliegt, 150 Dalton oder mehr beträgt.

32. Harzzusammensetzung nach einem der Ansprüche 1 bis 31, **dadurch gekennzeichnet, daß** das durchschnittliche Molekulargewicht der XH-Komponente im Bereich von mindestens 200, vorzugsweise mindestens 300 und höchstens 2500 Dalton liegt.

33. Harzzusammensetzung nach einem der Ansprüche 1 bis 32, **dadurch gekennzeichnet, daß** das durchschnittliche Molekulargewicht pro XH-Gruppe, die in der XH-Komponente vorliegt, 100 oder mehr beträgt.

34. Harzzusammensetzung nach einem der Ansprüche 1 bis 33, **dadurch gekennzeichnet, daß** die Harzzusammensetzung auch einen Inhibitor in einer Menge von 0,00001 bis 5,0 Ges.-%, bezogen auf die Gesamtmasse reaktiver Kohlenstoff-Kohlenstoff-Ungesättigtheiten und XH-Gruppen enthaltender Komponenten, enthält.

35. Harzzusammensetzung nach einem der Ansprüche 1 bis 34, **dadurch gekennzeichnet, daß** die Harzzusammensetzung auch einen Beschleuniger in einer Menge von 0,00001 bis 5,0 Gew.-%, bezogen auf die Gesamtmasse reaktiver Kohlenstoff-Kohlenstoff-Ungesättigtheiten und XH-Gruppen enthaltender Komponenten, enthält.

36. Harzzusammensetzung nach Anspruch 35, **dadurch gekennzeichnet, daß** es sich bei dem Beschleuniger entweder bei Verwendung zur Härtung in Kombination mit einer Perester- und/oder Peranhydridverbindung als Initiator für die Härtung um ein Amin oder bei Verwendung zur Härtung in Kombination mit einem beliebigen anderen Peroxid als Initiator für die Härtung um ein lösliches Salz oder einen Komplex von einzelnen Metallen oder Mischungen davon, ausgewählt unter Cobalt, Vanadium, Kupfer, Eisen, Mangan oder Titan, handelt.

37. Harzzusammensetzung nach einem der Ansprüche 1 bis 36, **dadurch gekennzeichnet, daß** die Harzzusammensetzung mit einem Peroxidinitiator, vorzugsweise einem Peroxid aus der Gruppe der flüssigen Peroxide und (festem) Benzoylperoxid, gehärtet werden kann.

38. Verfahren zur radikalischen Härtung einer Harzzusammensetzung nach einem der Ansprüche 1 bis 37, **dadurch gekennzeichnet, daß** man die Harzzusammensetzung - bei einer geeigneten Temperatur - mit einem Peroxid, einer Azoverbindung oder einem Benzopinakol behandelt.

39. Verfahren zur radikalischen Härtung nach Anspruch 38, **dadurch gekennzeichnet, daß** man die Härtung ausgehend von einem zweikomponentigen Harzzusammensetzungssystem gemäß einer der folgenden Ausführungsformen durchführt:
a. eine erste Komponente, umfassend die Komponente mit reaktiven Kohlenstoff-Kohlenstoff-Ungesättigtheiten und die XH-Gruppen enthaltende Komponente und gegebenenfalls ein reaktives Verdünnugsmittel; und eine zweite Komponente, umfassend ein Peroxid;
b. eine erste Komponente, umfassend die Komponente mit reaktiven Kohlenstoff-Kohlenstoff-Ungesättigtheiten und gegebenenfalls ein reaktives Verdünnugsmittel; und eine zweite Komponente, umfassend die XH-Gruppen enthaltende Komponente und ein Peroxid;
c. eine erste Komponente, umfassend die XH-Gruppen enthaltende Komponente; und eine zweite Komponente, umfassend ein Peroxid und die Komponente mit den reaktiven Kohlenstoff-Kohlenstoff-Ungesättigtheiten und gegebenenfalls ein reaktives Verdünnugsmittel; mit der Maßgabe, daß in dieser Ausführungsform c. die Komponente mit reaktiven Kohlenstoff-Kohlenstoff-Ungesättigtheiten weitgehend frei von homopolymerisierbaren und/oder copolymerisierbaren reaktiven Kohlenstoff-Kohlenstoff-Ungesättigtheiten ist.

40. Verfahren zur radikalischen Härtung nach einem der Ansprüche 38 oder 39, **dadurch gekennzeichnet, daß** man
die Härtung bei einer Temperatur im Bereich von -20 bis +200°C, vorzugsweise im Bereich von -20 bis +100°C und ganz besonders bevorzugt im Bereich von -10 bis +60°C durchführt.

41. Verfahren zur Synthese einer Diels-Alder-Addukt-Komponente durch Umsetzung von Cyclopentadien mit einer Harzkomponente mit mindestens einer telechelen Kohlenstoff-Kohlenstoff-Ungesättigtheit, **dadurch gekennzeichnet, daß** man
in einem ersten Schritt Dicyclopentadien bei einer Temperatur weit unter 150°C zu einer ungesättigten Polyesterharzkomponente mit mindestens einer telechelen Kohlenstoff-Kohlenstoff-Ungesättigtheit pro Molekül in einer Menge von mindestens 0,5 mol Dicyclopentadien pro Mol telechele ungesättigte Kohlenstoff-Kohlenstoff-Bindungen in dem als Ausgangsstoff dienenden ungesättigten Polyesterharz gibt;
in einem zweiten Schritt die im ersten Schritt erhaltene Mischung auf eine Temperatur im Bereich von 150 bis 180°C erhitzt und über einen zur Umwandlung der telechelen ungesättigten Kohlenstoff-Kohlenstoff-Bindungen in dem als Ausgangsstoff dienenden ungesättigten Polyesterharz ausreichenden Zeitraum reagieren läßt und schließlich den Überschuß an Dicyclopentadien und Cyclopentadien durch Abdampfen entfernt.

42. Verfahren nach Anspruch 41, **dadurch gekennzeichnet, daß** es sich bei der telechelen ungesättigten Kohlenstoff-Kohlenstoff-Bindung um eine (Meth)acrylbindung handelt.

## Revendications

1. Composition de résine pour le durcissement par voie radicalaire comprenant un composant contenant des insaturations carbone-carbone réactives ("composant RU") et un composant contenant des groupes XH ("composant XH"), X ne représentant pas C ni O,
**caractérisée en ce que**
a. le composant de résine est substantiellement exempt de photo-initiateurs ; et
b. le nombre moyen d'insaturations carbone-carbone réactives du composant RU est supérieur à 2 ; et
c. au moins un des groupes XH du composant XH est un groupe thiol et le nombre moyen de groupes XH du composant XH est égal ou supérieur à 2 ; et où
d. au moins un des nombres moyens respectivement des insaturations ou des groupes XH est supérieur à 2 ; et
e. au plus 5% en mole des insaturations réactives sont en mesure de subir une homopolymérisation ; et
f. au plus 5% en mole des insaturations réactives sont présents sous forme d'un alkylène à fonctionnalité mono-ène ; et
g. le rapport molaire des groupes XH aux insaturations réactives est situé dans la plage de 4:1 à 1:4 ;
à condition que le composant RU ne soit pas le tris-(norborn-5-ène-2-carboxy)propoxypropane.

2. Composition de résine selon la revendication 1, **caractérisée en ce qu'**au moins un des nombres moyens respectivement des insaturations carbone-carbone réactives ou des groupes XH est supérieur à 2,5.

3. Composition de résine selon la revendication 1 ou 2, **caractérisée en ce qu'**au moins un des nombres moyens respectivement des insaturations carbone-carbone réactives ou des groupes XH est supérieur à 3.

4. Composition de résine selon l'une quelconque des revendications 1 à 3, **caractérisée en ce que** le rapport molaire des groupes XH aux insaturations carbone-carbone réactives est situé dans la plage de 1,5:1 à 1:1,5.

5. Composition de résine selon la revendication 4, **caractérisée en ce que** la fonctionnalité moyenne par RU d'insaturations carbone-carbone réactives est située dans la plage entre 1 et 2.

6. Composition de résine selon l'une quelconque des revendications 1 à 5, **caractérisée en ce que** les groupes XH sont présents dans un composant XH ou un mélange de composants XH présentant un nombre moyen de groupes XH par mole égal ou supérieur à 3.

7. Composition de résine selon l'une quelconque des revendications 1 à 6, **caractérisée en ce que** les groupes XH sont présents dans un composant XH présentant un nombre moyen de groupes XH par mole égal ou supérieur à 4.

8. Composition de résine selon l'une quelconque des revendications 1 à 7, **caractérisée en ce que** le nombre moyen des insaturations carbone-carbone réactives est égal ou supérieur à 2,5.

9. Composition de résine selon la revendication 8, **caractérisée en ce que** le nombre moyen des insaturations carbone-carbone réactives est égal ou supérieur à 3.

10. Composition de résine selon la revendication 9, **caractérisée en ce que** le nombre moyen des insaturations carbone-carbone réactives est égal ou supérieur à 4.

11. Composition de résine selon l'une quelconque des revendications 1 à 10, **caractérisée en ce que** la moyenne globale du nombre moyen des insaturations carbone-carbone réactives et du nombre moyen de groupes XH est égale ou supérieure à 2,5.

12. Composition de résine selon la revendication 11, **caractérisée en ce que** la moyenne globale du nombre moyen des insaturations carbone-carbone réactives et du nombre moyen de groupes XH est égale ou supérieure à 3.

13. Composition de résine selon l'une quelconque des revendications 1 à 12, **caractérisée en ce que** le % en mole d'insaturations carbone-carbone réactives en mesure de subir une homopolymérisation est situé dans la plage de 0 à 1% en mole.

14. Composition de résine selon l'une quelconque des revendications 1 à 13, **caractérisée en ce que** le % en mole d'insaturations carbone-carbone réactives présentes sous forme d'un alkylène à fonctionnalité mono-ène est situé dans la plage de 0 à 1% en mole.

15. Composition de résine selon l'une quelconque des revendications 1 à 14, **caractérisée en ce que** le composant XH est choisi dans le groupe des composants de type thiol, phosphine et amine.

16. Composition de résine selon la revendication 15, **caractérisée en ce que** qu'au moins un des groupes XH dans le composant XH est un groupe thiol.

17. Composition de résine selon l'une quelconque des revendications 1 à 16, **caractérisée en ce que** le composant XH est un composant thiol aliphatique.

18. Composition de résine selon la revendication 17, **caractérisée en ce que** le composant thiol est choisi dans le groupe des esters de type α-mercaptoacétate et/ou ß-mercaptopropionate de monoalcools, de diols, de triols, de tétraols, de pentaols et d'autres polyols, et/ou des dérivés de composants de type mercaptopropalkyltrialcoxysilane.

19. Composition de résine selon l'une quelconque des revendications 1 à 18, **caractérisée en ce que** la part d'insaturations carbone-carbone réactives présentes dans l'épine dorsale du composant contenant des insaturations carbone-carbone réactives correspond à au moins un nombre moyen d'insaturations carbone-carbone réactives égal ou supérieur à 1.

20. Composition de résine selon l'une quelconque des revendications 1 à 17, **caractérisée en ce que** la part d'insaturations carbone-carbone réactives présentes dans une structure cyclique ou hétérocyclique en C₅₋₁₂, de préférence dans une structure cyclique ou hétérocyclique en C₇₋₉, correspond à au moins un nombre moyen d'insaturations carbone-carbone réactives égal ou supérieur à 1.

21. Composition de résine selon la revendication 20, **caractérisée en ce que** ladite part d'insaturations carbone-carbone réactives est présente dans une structure carbocyclique en C₅₋₁₂, de préférence une structure carbocyclique en C₇₋₉.

22. Composition de résine selon la revendication 21, **caractérisée en ce que** ladite part d'insaturations carbone-carbone réactives est présente dans une structure bicyclique en C₅₋₁₂, de préférence une structure bicyclique en C₇₋₉.

23. Composition de résine selon l'une quelconque des revendications 1 à 22, **caractérisée en ce que** la part d'insaturations carbone-carbone réactives présentes dans une position téléchélique dans le composant contenant des insaturations carbone-carbone réactives correspond à au moins un nombre moyen d'insaturations carbone-carbone réactives égal ou supérieur à 1.

24. Composition de résine selon l'une quelconque des revendications 1 à 23, **caractérisée en ce qu'**au moins une partie du composant contenant des insaturations carbone-carbone réactives présente un indice de ramification égal ou supérieur à 1.

25. Composition de résine selon l'une quelconque des revendications 1 à 24, **caractérisée en ce que** le composant contenant les insaturations carbone-carbone réactives est choisi parmi les groupes formés par
(i) les esters ou les amides de l'acide fumarique, maléique, mésaconique, crotonique, cinnamique et/ou sorbique et/ou les produits d'addition de Diels-Alder de ceux-ci avec des composés de type diène ; et
(ii) les produits d'addition de Diels-Alder d'esters ou d'amides de l'acide acrylique, méthacrylique ou itaconique avec des composés de type diène ; et
(iii) des composés de type dicyclopentadiène éthyléniques cycliques à 5 chaînons.

26. Composition de résine selon la revendication 25, **caractérisée en ce que** le produit de Diels-Alder est un produit d'addition avec du butadiène ou du cyclopentadiène.

27. Composition de résine selon l'une quelconque des revendications 1 à 26, **caractérisée en ce qu'**en plus du composant contenant des insaturations carbone-carbone réactives, un diluant réactif contenant des insaturations carbone-carbone réactives est également présent en une quantité d'au plus 25% en poids du composant contenant les insaturations carbone-carbone réactives.

28. Composition de résine selon l'une quelconque des revendications 1 à 27, **caractérisée en ce qu'**au moins pour une partie des insaturations carbone-carbone réactives dans le composant contenant ces insaturations, la fonctionnalité des insaturations réactives est supérieure à 2.

29. Composition de résine selon l'une quelconque des revendications 1 à 28, **caractérisée en ce que** la composition de résine comprend un mélange de composants contenant des insaturations carbone-carbone réactives dont au plus 50% en mole des insaturations réactives sont copolymérisables, de préférence au plus 30% en poids.

30. Composition de résine selon l'une quelconque des revendications 1 à 29, **caractérisée en ce que** le poids moléculaire moyen du composant contenant les insaturations carbone-carbone réactives, et en excluant les insaturations carbone-carbone réactives éventuelles du diluant réactif, est situé dans la plage d'au moins 500, de préférence d'au moins 1000, plus préférablement d'au moins 2000 et d'au plus 15 000 Daltons.

31. Composition de résine selon l'une quelconque des revendications 1 à 30, **caractérisée en ce que** le poids moléculaire moyen par insaturation carbone-carbone réactive présente dans la masse totale du composant contenant des insaturations carbone-carbone réactives et du diluant réactif est de 150 Daltons ou plus.

32. Composition de résine selon l'une quelconque des revendications 1 à 31, **caractérisée en ce que** le poids moléculaire moyen du composant XH est situé dans la plage d'au moins 200, de préférence d'au moins 300 et d'au plus 2500 Daltons.

33. Composition de résine selon l'une quelconque des revendications 1 à 32, **caractérisée en ce que** le poids moléculaire moyen par groupe XH présent dans le composant XH est de 100 ou plus.

34. Composition de résine selon l'une quelconque des revendications 1 à 33, **caractérisée en ce que** la composition de résine contient également un inhibiteur en une quantité de 0,00001 à 5,0% en poids, calculée par rapport à la masse totale de composants contenant des insaturations carbone-carbone réactives et des groupes XH.

35. Composition de résine selon l'une quelconque des revendications 1 à 34, **caractérisée en ce que** la composition de résine contient également un accélérateur en une quantité de 0,00001 à 5,0% en poids, calculée par rapport à la masse totale de composants contenant des insaturations carbone-carbone réactives et des groupes XH.

36. Composition de résine selon la revendication 35, **caractérisée en ce que** l'accélérateur est soit une amine, lorsqu'il est utilisé pour le durcissement en combinaison avec un composé de type perester et/ou peranhydride comme initiateur pour le durcissement, soit un sel ou un complexe soluble de métaux simples ou de mélanges de ceux-ci choisis parmi le cobalt, le vanadium, le cuivre, le fer, le manganèse ou le titane lorsqu'il est utilisé pour un durcissement en combinaison avec n'importe quel autre peroxyde comme initiateur pour le durcissement.

37. Composition de résine selon l'une quelconque des revendications 1 à 36, **caractérisée en ce que** la composition de résine est en mesure d'être durcie avec un initiateur de type peroxyde, de préférence un peroxyde choisi dans le groupe des peroxydes liquides et du benzoylperoxyde (solide).

38. Procédé pour le durcissement par voie radicalaire d'une composition de résine selon l'une quelconque des revendications 1 à 37, **caractérisé en ce que** la composition de résine est traitée - à une température appropriée - avec un peroxyde, un composé azo ou un benzopinacole.

39. Procédé pour le durcissement par voie radicalaire selon la revendication 38, **caractérisé en ce que** le durcissement est réalisé en partant d'un système de composition de résine à deux composants selon l'une quelconque des formes de réalisation suivantes :
a. un premier composant comprenant le composant contenant des insaturations carbone-carbone réactives et le composant contenant des groupes XH et éventuellement un diluant réactif ; et un deuxième composant comprenant un peroxyde ;
b. un premier composant comprenant le composant contenant des insaturations carbone-carbone réactives et éventuellement un diluant réactif ; et un deuxième composant comprenant le composant contenant des groupes XH et un peroxyde ;
c. un premier composant comprenant le composant contenant des groupes XH ; et un deuxième composant comprenant un peroxyde et le composant contenant les insaturations carbone-carbone réactives et éventuellement un diluant réactif, à condition que dans cette forme de réalisation c., le composant contenant des insaturations carbone-carbone réactives soit substantiellement exempt d'insaturations carbone-carbone réactives homopolymérisables et/ou copolymérisables.

40. Procédé pour le durcissement par voie radicalaire selon l'une quelconque des revendications 38 ou 39, **caractérisé en ce que** le durcissement est effectué à une température dans la plage de -20 à +200°C, de préférence dans la plage de -20 à +100°C, et le plus préférablement dans la plage de -10 à +60°C.

41. Procédé pour la synthèse d'un composé d'addition de Diels-Alder provenant de la réaction de cyclopentadiène avec un composant de résine contenant au moins une insaturation carbone-carbone téléchélique, **caractérisé en ce que**, dans une première étape, le dicyclopentadiène est ajouté à une température nettement inférieure à 150°C à un composant de résine de type polyester insaturé présentant au moins une insaturation carbone-carbone téléchélique par molécule en une quantité d'au moins 0,5 mole de dicyclopentadiène par mole de liaisons insaturées carbone-carbone téléchéliques dans ledit matériau de départ de résine de type polyester insaturé et **en ce que**, dans une deuxième étape, le mélange obtenu dans la première étape est chauffé à une température dans la plage de 150 à 180°C ; et on le laisse réagir pendant un laps de temps suffisant pour la conversion des liaisons insaturées carbone-carbone téléchéliques dans le matériau de départ de résine de type polyester insaturé ; et enfin, l'excès de dicyclopentadiène et de cyclopentadiène est éliminé par évaporation.

42. Procédé selon la revendication 41, **caractérisé en ce que** la liaison insaturée carbone-carbone téléchélique est une liaison (méth)acrylique.
